# EUROPÄISCHE PATENTSCHRIFT

(11) **EP 3 254 152 B1**
(45) Veröffentlichungstag und Bekanntmachung des Hinweises auf die Patenterteilung: **02.04.2025**
(21) Anmeldenummer: 16703116.0
(22) Anmeldetag: 04.02.2016
(51) Int. Cl.: G02B 27/01, B60K 35/21, B60K 35/29

(54) **VORRICHTUNG ZUR DATENEINSPIEGELUNG MITTELS HOLOGRAFISCHER OPTISCHER ELEMENTE**
DEVICE FOR PROJECTING DATA BY MEANS OF HOLOGRAPHIC OPTICAL ELEMENTS
DISPOSITIF POUR L'INCRUSTATION DE DONNÉES EN UTILISANT DES ÉLÉMENTS OPTIQUES HOLOGRAPHIQUES

(30) Priorität: 05.02.2015 DE 102015101687
(43) Veröffentlichungstag der Anmeldung: 13.12.2017
(60) Teilanmeldung: 25159190.5
(73) Patentinhaber: Carl Zeiss Jena GmbH, 07745 Jena (DE)
(72) Erfinder: ERLER, Christoph, 07745 Jena (DE); BURKHARDT, Matthias, 07745 Jena (DE); GATTO, Alexandre, 51429 Bergisch Gladbach (DE)
(74) Vertreter: Kraus & Lederer PartGmbB
(86) Internationale Anmeldenummer: PCT/EP2016/052431
(87) Internationale Veröffentlichungsnummer: WO 2016/124713

(56) Entgegenhaltungen:
- DE-A1- 102008 039 737
- US-A- 5 112 121
- US-A1- 2010 328 433

## Beschreibung

Die vorliegende Anmeldung betrifft Verfahren und Vorrichtungen zur Dateneinspiegelung, insbesondere für sogenannte Head-up-Displays (HUDs). Insbesondere betrifft die vorliegende Anmeldung solche Verfahren und Vorrichtungen, welche in Fahrzeugen, insbesondere in Kraftfahrzeugen, einsetzbar sind. Die in dieser Anmeldung beschriebenen Verfahren und Vorrichtungen können jedoch auch bei anderen Anwendungen, insbesondere bei allen transparenten Scheiben, angewendet werden. Beispielsweise können die beschriebenen Verfahren und Vorrichtungen auch bei transparenten Schreiben von anderen Fahrzeugen, wie beispielsweise Bahnen, Bussen, Schiffen oder Flugzeugen oder auch im Immobilienbereich bei Fensterscheiben verwendet werden, wenn dort eine Dateneinspiegelung erwünscht wird.

Verfahren und Vorrichtungen zur Dateneinspiegelung werden zunehmend verwendet, um einem Benutzer Daten auf einfache Weise bereitzustellen. Der Begriff "Daten" ist dabei allgemein zu verstehen, eingespiegelte Daten können beispielsweise Bilder, Videos, Symbole, Zeichen und/oder Zahlen umfassen.

Ein Anwendungsgebiet derartiger Verfahren und Vorrichtungen zur Dateneinspiegelung ist der Fahrzeugbereich, um z.B. einem Führer eines Fahrzeugs, beispielsweise einem Fahrer eines Automobils, während der Fahrt Daten bereitzustellen. Dies kann beispielsweise durch entsprechende Elemente in einer Windschutzscheibe eines Fahrzeugs erfolgen, wodurch der Fahrer seinen Blick nicht extra auf eine Anzeige beispielsweise eines Kombiinstruments richten muss, um Daten zu erhalten, sondern diese Daten im Wesentlichen wahrnehmen kann, ohne seinen Blick wesentlich von der Straße abzuwenden.

Derartige Verfahren und Vorrichtungen sind beispielsweise in allgemeiner Weise aus der DE 10 2008 039 737 A1 bekannt. Hier wird ein holografisches optisches Element in einer Windschutzscheibe zum Bereitstellen einer Reflexion für das menschliche Auge vorgeschlagen, wobei die Konzepte insbesondere für schräge Windschutzscheiben von Personenkraftwagen erläutert werden. Weiterer Stand der Technik ist bekannt aus US5112121 A.

Weitere Beispiele für Dateneinspiegelung, welche beispielsweise auch für Automobilanwendungen verwendbar sind, sind aus der WO 2014/115095 A2 bekannt. Dabei wird ein holografischer Bildschirm verwendet, und je nach Abstand dieses Bildschirms von einem menschlichen Auge ist eine spezielle Kontaktlinse nötig, um auf einfache Weise auf diesen Bildschirm fokussieren zu können.

Es ist daher eine Aufgabe der vorliegenden Anmeldung, verbesserte Vorrichtungen und Verfahren zur Dateneinspiegelung bereitzustellen.

Es wird eine Vorrichtung nach Anspruch 1 Die Unteransprüche definieren bevorzugte Ausführungsformen.

Im Folgenden werden verschiedene Ausführungsbeispiele der vorliegenden Erfindung unter Bezugnahme auf die beigefügten Zeichnungen näher erläutert. Es zeigen:
Fig. 1 eine schematische Darstellung einer Vorrichtung zur Dateneinspiegelung gemäß einem Ausführungsbeispiel,
Fig. 2 eine Darstellung einer Vorrichtung zur Dateneinspiegelung gemäß einem weiteren Ausführungsbeispiel,
Fig. 3 eine Darstellung einer Vorrichtung zur Dateneinspiegelung gemäß einem nicht erfindungsgemässen Ausführungsbeispiel,
Fig. 4 ein Flussdiagramm zur Veranschaulichung eines Verfahrens gemäß einem Ausführungsbeispiel,
Fig. 5 eine Darstellung einer Vorrichtung zur Dateneinspiegelung gemäß einem weiteren Ausführungsbeispiel,
Fig. 6 eine Darstellung eines holografischen Elements zum Schutz vor Laserstrahlung gemäß einem Ausführungsbeispiel,
Fig. 7 eine Darstellung einer Vorrichtung zur Dateneinspiegelung gemäß einem weiteren Ausführungsbeispiel,
Fig. 8A bis Fig. 8C Darstellungen zur Veranschaulichung einer Herstellung einer Vorrichtung gemäß einem Ausführungsbeispiel,
Fig. 9A und 9B Darstellungen zur Veranschaulichung der Herstellung einer Vorrichtung gemäß einem weiteren Ausführungsbeispiel,
Fig. 10 eine schematische Darstellung einer Vorrichtung zur Dateneinspiegelung gemäß einem weiteren Ausführungsbeispiel,
Fig. 11 eine schematische Darstellung zur Veranschaulichung einer Herstellung einer Vorrichtung gemäß des Ausführungsbeispiels der Fig. 10,
Fig. 12 eine schematische Darstellung einer Vorrichtung zur Dateneinspiegelung gemäß einem weiteren Ausführungsbeispiel, und
Fig. 13 eine schematische Darstellung eines 3D-Bildgebers.

Im Folgenden werden verschiedene Ausführungsbeispiele detailliert erläutert. Diese Ausführungsbeispiele dienen lediglich der Veranschaulichung und sind nicht als einschränkend auszulegen. Beispielsweise werden Ausführungsbeispiele mit einer Vielzahl von Merkmalen, Elementen und Details beschrieben, was nicht dahingehend auszulegen ist, dass alle diese Merkmale, Elemente oder Details zur Implementierung notwendig sind. Vielmehr können bei anderen Ausführungsbeispielen manche der Elemente, Merkmale und Details weggelassen sein und/oder durch alternative Merkmale, Elemente und Details ersetzt sein. Elemente, Merkmale und Details verschiedener Ausführungsbeispiele können miteinander kombiniert werden.

Bei Ausführungsbeispielen wird ein holografisches Element zur Dateneinspiegelung verwendet. Das holografische Element kann insbesondere wellenlängenselektiv sein, beispielsweise für eine rote, eine grüne und/oder eine blaue Wellenlänge, und für andere Wellenlängen transparent sein.

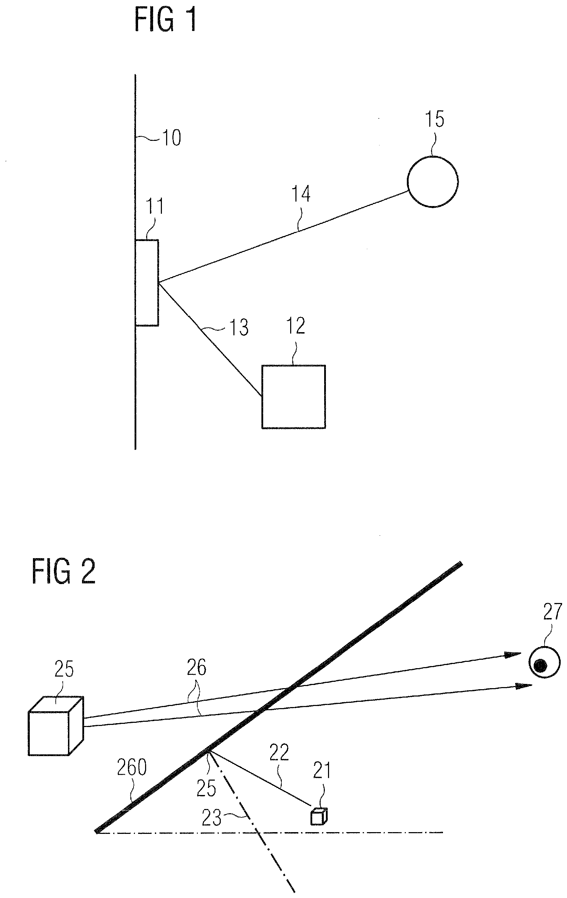

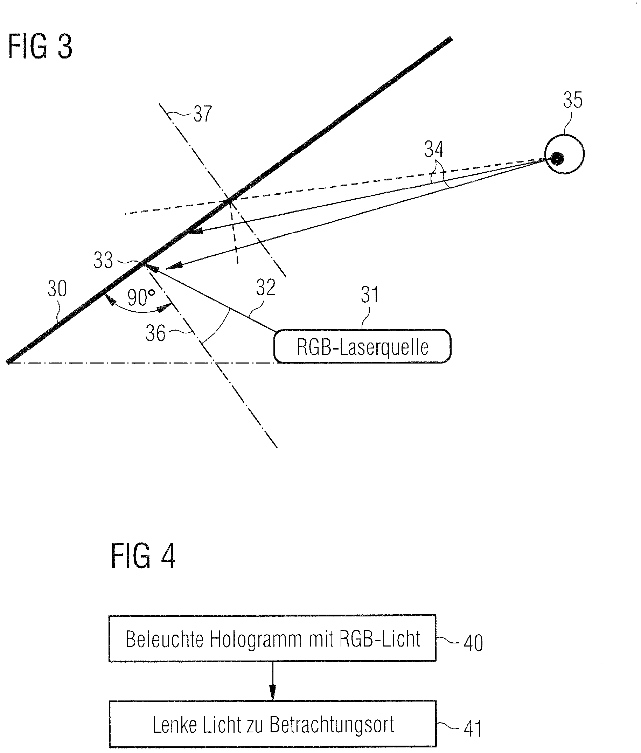

In Fig. 1 ist eine Vorrichtung gemäß einem Ausführungsbeispiel dargestellt. Bei dem Ausführungsbeispiel der Fig. 1 ist auf einem Träger 10 ein holografisches Element 11 aufgebracht. Der Träger 10 kann insbesondere eine Windschutzscheibe eines Fahrzeugs sein. Erfindungsgemäss ist der Träger 10 eine näherungsweise senkrechte Windschutzscheibe, erfindungsgemäss eine um maximal 15° oder alternativ maximal 10° zur Senkrechten geneigte Windschutzscheibe, wie sie beispielsweise in Bussen oder Lastkraftwagen zum Einsatz kommt. Derartige Windschutzscheiben können insbesondere Krümmungen aufweisen. Auf oder in dem Träger 10 ist das holografische Element 11 bereitgestellt. Das holografische Element 11 kann nicht erfindungsgemäss als Mattscheibe wirken, wirkt erfindungsgemäss aber abbildend, um ein Zwischenbild zu erzeugen. Beispiele hierfür werden später unter Bezugnahme auf die Fig. 2 und 3 erläutert.

Das holografische Element 11 kann schmalbandig wellenlängenselektiv sein, d.h. nur für Wellenlängen innerhalb eines oder mehrerer schmaler spektraler Bereiche eine abbildende Funktion und/oder Mattscheibenfunktion haben, während es für die übrigen Wellenlängen transparent bleibt. Auf diese Weise ist das holografische Element 11 für die meisten Wellenlängen transparent, und ermöglicht beispielsweise eine Durchsicht durch eine als Träger 10 dienende Windschutzscheibe. Schmalbandig kann dabei bedeuten, dass eine Funktion des holografischen Elements nur in einem oder mehreren spektralen Bereichen einer Breite < 20 nm oder < 10 nm, insbesondere für spezifische Wellenlängen ± eine fertigungsbedingte Toleranz, vorliegt.

Insbesondere kann eine holografische Funktion für eine rote, eine blaue und eine grüne Wellenlänge vorliegen, wodurch bei gleichzeitiger Durchsichtigkeit für den größten Teil des sichtbaren Lichts eine Einspiegelung farbiger Daten ermöglicht wird.

Die Vorrichtung der Fig. 1 umfasst weiter eine Bildgebungsvorrichtung 12 (im Folgenden auch als Bildgeber bezeichnet), welche Licht entsprechend einzuspiegelnder Daten zu dem holografischen Element 11 hin lenkt. Bei einem holografischen Element 11 mit Mattscheibenfunktion kann die Bildgebungsvorrichtung 12 beispielsweise das holografische Element 11 mit einem oder mehreren Laserstrahlen (beispielsweise einem roten, einem grünen und/oder einem blauen Laserstrahl) abrastern. Bei einem holografischen Element 11 mit abbildender Funktion zur Erzeugung eines virtuellen Zwischenbildes kann die Bildgebungsvorrichtung 12 beispielsweise selbst eine Mattscheibe beinhalten, und das Licht entsprechend dem Licht auf der Mattscheibe wird als Licht 13 zu dem holografischen Element 11 hin gelenkt. Bei anderen Ausführungsbeispielen kann die Bildgebungsvorrichtung 12 auch beispielsweise eine Anzeige wie ein (O)LED-, LCD- oder TFT-Display als bildgebendes Element umfassen.

Das holografische Element 11 lenkt dann das Licht 13 entsprechend einer holografischen Funktion des holografischen Elements 11 als Licht 14 zu einem Auge 15 eines Betrachters, wodurch der Betrachter die eingespiegelten Daten betrachten kann.

Wie bereits eingangs erläutert ist der Begriff "Daten" dabei breit zu verstehen und kann sich auf beliebige Symbole, Buchstaben, Zahlen, Bilder, Videos und/oder Kombinationen hiervon beziehen.

Durch die Verwendung des holografischen Elements 11, insbesondere eines abbildenden holografischen Elements, kann ein für die Dateneinspiegelung benötigter Bauraum reduziert werden. Insbesondere können Abbildungseigenschaften des Hologramms 11 so gewählt werden, dass weitere abbildende Elemente beispielsweise zur Vergrößerung, wie beispielsweise Freiformspiegel oder Linsen, und/oder Elemente zur Strahlfaltung nicht notwendig sind.

Die Fig. 2 zeigt eine Vorrichtung zur Dateneinspiegelung gemäß einem Ausführungsbeispiel. Das Ausführungsbeispiel der Fig. 2 dient zur Einspiegelung von Daten in eine Windschutzscheibe 20, welche als Träger für ein holografisches Element 25 dient. Bei dem darstellten Ausführungsbeispiel ist die Windschutzscheibe 20 geneigt. Bei anderen Ausführungsbeispielen kann die Windschutzscheibe 20 senkrecht oder näherungsweise senkrecht sein, wie es z.B. bei einer Windschutzscheibe eines Lastkraftwagens oder eines Busses der Fall ist.

Auf oder in der Windschutzscheibe 20 ist ein holografisches Element 25 angeordnet. Das holografische Element 25 kann insbesondere ein Volumenhologramm umfassen, in dem in einer oder mehreren Schichten eine abbildende Funktion holografiert wurde. Diese Funktion kann insbesondere bei einem bevorzugten Ausführungsbeispiel für drei diskrete Wellenlängen im roten, blauen und grünen Bereich holografiert sein, so dass das holografische Element 25 für diese drei Wellenlängen eine abbildende Funktion wie nachfolgend beschrieben aufweist, während es für andere Wellenlängen transparent ist und somit insbesondere eine Betrachtung durch die Windschutzscheibe ermöglicht.

Eine Bildgebungsvorrichtung 21 beleuchtet wie durch einen Strahl 22 angedeutet das holografische Element 25 mit einem darzustellenden Bild entsprechend den einzuspiegelnden Daten. Das darzustellende Bild kann beispielsweise durch Abrastern einer Mattscheibe mit einem oder mehreren Lasern oder durch eine Anzeigeeinrichtung wie ein LCD-Display, ein TFT-Display oder ein Leuchtdioden(LED)display (beispielsweise basierend auf organischen Leuchtdioden (OLED)) erzeugt werden.

Das holografische Element 25 wird dabei mit dem Bild unter einem Winkel zu einer Senkrechten 23 auf der Windschutzscheibe 20 beleuchtet, wobei der Winkel von einer Ausgestaltung des holografischen Elements 25 abhängen kann. Insbesondere zeigt das holografische Element 25 bei manchen Ausführungsbeispielen nur für einen oder mehrere bestimmte Einstrahlungswinkel (beispielsweise zwischen dem Lichtstrahl 22 und der Senkrechten 23) eine abbildende Funktion, während es für andere Winkel transparent ist.

Bei dem Ausführungsbeispiel der Fig. 2 bildet das holografische Element 25 das empfangene Bild auf ein virtuelles Bild 25 ab. Das virtuelle Bild 25 wird wie durch Strahlen 26 angedeutet für eine Eyebox eines Auges 27 eines Betrachters dargestellt.

Der Winkel, unter dem das virtuelle Bild 25 für das Auge 27 erscheint, unterscheidet sich dabei von dem Winkel, unter dem das Bild entsprechend dem Strahl 22 auf das holografische Element 25 fällt. Die beteiligten Winkel können durch das Design des jeweiligen holografischen Elements 25 angepasst werden. Insbesondere können die beteiligten Winkel bei der Belichtung des Hologramms ebenso wie eine Krümmung der Windschutzscheibe 20 berücksichtigt werden.

Somit wird die Funktion des holografischen Elements bei bestimmten Ausführungsbeispielen nur für eine oder mehrere ausgewählte Wellenlängen und nur für Einfall unter einem oder mehreren Winkeln wirksam, da beispielsweise nur für diese Winkel und Wellenlänge eine Bragg-Bedingung erfüllt ist. Licht anderer Farbe passiert ungehindert das holografische Element, so dass hier die Scheibe transparent ist.

Das Ausführungsbeispiel der Fig. 2 kann somit an viele verschiedene Windschutzscheiben auf einfache Weise angepasst werden und kann insbesondere für näherungsweise senkrechte Windschutzscheiben verwendet werden.

Bevorzugt wird dabei das virtuelle Bild 25 in eine Entfernung > 2 m, noch bevorzugter > 4 m, insbesondere > 6 m oder > 8 m von dem Auge 27 abgebildet. Auf diese Weise ist keine oder nur eine geringere Änderung eines Fokus des Auges 27 zwischen einer Betrachtung beispielsweise einer Straße durch die Windschutzscheibe 20 und der Betrachtung des virtuellen Bildes 25 erforderlich. Dies kann eine Betrachtung des virtuellen Bildes 25 und somit der eingespiegelten Daten erleichtern und beispielsweise weniger ermüdend für ein Auge sein als in Fällen, in denen ständig zwischen einem nahen virtuellen Bild und der Straße hin und her fokussiert werden muss. Bei anderen Ausführungsbeispielen kann das virtuelle Bild auch in einer Entfernung < 2 m erzeugt werden.

Bei dem Ausführungsbeispiel der Fig. 2 kann beispielsweise ein Winkel zwischen dem Strahl 22 und der Senkrechten 23 im Bereich von 35° sein, die Windschutzscheibe kann in einem Winkel von 30° zur Waagerechten stehen, und ein Abstand des Auges 27 zur Windschutzscheibe kann ungefähr 80 cm betragen. Ein Betrachtungswinkel für das virtuelle Bild 25 kann im Bereich von 5°-7° liegen, und die Betrachtung des Bildes 25 kann unter einem Winkel von etwa 65° zur Senkrechten auf der Windschutzscheibe erfolgen. Für ein Belichtungs-Setup können dann entsprechende Winkel zur Belichtung des Hologramms gewählt werden.

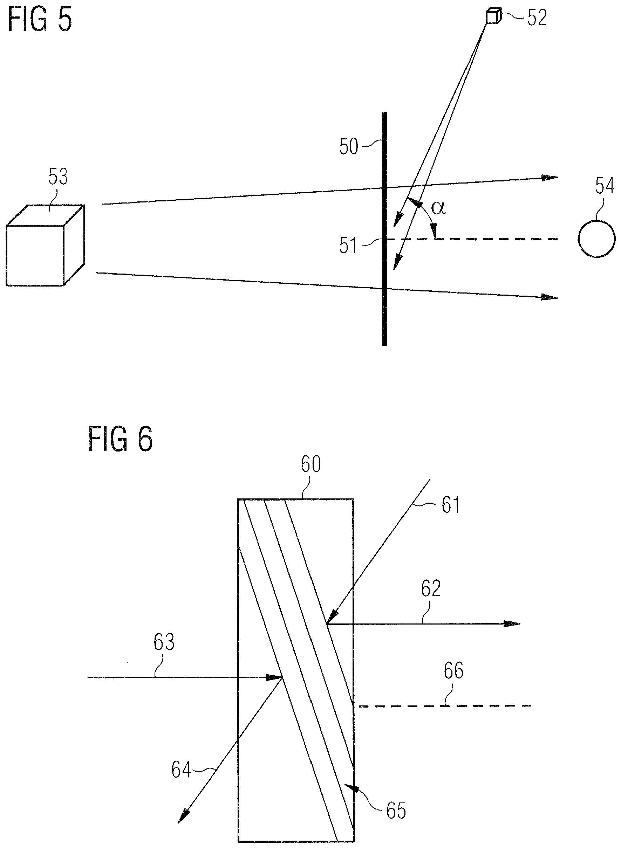

In Fig. 5 ist eine Darstellung einer Vorrichtung ähnlich der Vorrichtung der Fig. 2 für den Fall einer senkrechten Windschutzscheibe dargestellt. Die Windschutzscheibe ist dabei mit 50 bezeichnet, mit 51 ist eine Position eines entsprechenden holografischen Elements bezeichnet. Eine Bildgebungsvorrichtung 52 beleuchtet das holografische Element 51 unter einem Winkel α zwischen einem Hauptstrahl von der Bildgebungsvorrichtung 52 zu dem holografischen Element 51 und einer Senkrechten auf der Windschutzscheibe 50, erfindungsgemäss zwischen 40 und 80°, mit einem Bild, welches einzuspiegelnden Daten entspricht. Das holografische Element 51 bildet dieses Bild virtuell vergrößert ab, wobei das virtuelle Bild 53 von einem Auge 54 innerhalb einer Eyebox betrachtet werden kann. Die Verwendung des holografischen Elements 51 bietet dabei verglichen beispielsweise mit spiegelnden Head-Up-Displays den Vorteil, dass unter einem im Wesentlichen beliebigen Winkel α beleuchtet werden kann (beispielsweise zwischen 40 und 80°) und nahe der Normalen betrachtet werden kann, so dass hier Einfallswinkel und Ausfallswinkel verschieden sein können. Die Bildgebungsvorrichtung 52 kann dabei beispielsweise in einer Position oberhalb (wie dargestellt) oder unterhalb der Windschutzscheibe angeordnet sein. Entsprechende Ausgestaltungen sind auch mit holografischen Mattscheiben, wie sie später näher erläutert werden, möglich.

Somit lässt sich eine Vorrichtung zur Dateneinspiegelung für Fahrzeuge mit senkrechten Windschutzscheiben, wie Busse, LKWs oder Nutzfahrzeuge, einrichten, für die es bisher mit herkömmlichen spiegelnden Lösungen keine Möglichkeiten für ein Head-Up-Display gibt.

In Fig. 3 ist eine Vorrichtung gemäß einem nicht erfindungsgemässen Ausführungsbeispiel dargestellt. Bei dem Ausführungsbeispiel der Fig. 3 ist wiederum ein holografisches Element 33 in einer Windschutzscheibe 30 bereitgestellt. Das holografische Element 33 weist bei dem Ausführungsbeispiel der Fig. 3 eine Mattscheibenfunktion auf (auch als holografische Mattscheibe bezeichnet). Diese Mattscheibenfunktion kann insbesondere wieder für bestimmte Einfallswinkel von einfallendem Licht 32 zu einer Senkrechten 36 und für bestimmte Wellenlängen, bevorzugt eine rote, eine grüne und/oder eine blaue Wellenlänge, implementiert sein. Für andere Wellenlängen oder Winkel kann das holografische Element 33 transparent sein.

Durch die Bereitstellung einer Mattscheibenfunktion muss hier kein Zwischenbild erzeugt werden. Das holografische Element kann beispielsweise direkt mittels einer Laserlichtquelle 31 beleuchtet, insbesondere abgerastert werden. Dabei erfolgt der Bildaufbau z.B. wie bei konventionellen Röhrenmonitoren durch zeilenweises schnelles Ablenken eines Leuchtpunktes. Der Leuchtpunkt wird im vorliegenden Fall i.d.R. durch einen Laserfokus gebildet und während der Ablenkbewegung in seiner Helligkeit zeitlich derart moduliert, dass durch zeitliche Mittelung innerhalb einer Zeitspanne, die das menschliche Auge nicht mehr auflösen kann, der Bildeindruck entsteht.

Bei einem Ausführungsbeispiel weist die Laserlichtquelle 31 drei verschiedene Laser roter, grüner und blauer Farbe auf, mit welchen das holografische Element 33 abgerastert werden kann, so dass eine Farbdarstellung möglich ist. Es sind jedoch auch andere Arten der polychromatischen Bilderzeugung, d.h. der Bilderzeugung mit mehreren Farben, möglich. Beispielsweise können zeitlich getriggert Anzeigemöglichkeiten unter Verwendung einer Mikrospiegelanordnung (DMD, Digital Micromirror Device) oder einer Flüssigkristalleinrichtung (beispielsweise LCoS, Liquid Crystal on Silicon) verwendet werden. Dabei wird das gesamte Bild in den einzelnen Farben nacheinander dargestellt, wobei die zeitliche Abfolge der Darstellung so schnell erfolgt, dass der Betrachter nur das polychromatische Bild mit gewünschter Bildfärbung sieht.

Für eine polychromatische Bilddarstellung ist es dabei bei typischen holographischen Elementen wichtig, dass die Wellenlängen der Bilderzeugung (beispielsweise rote, grüne und blaue Wellenlänge) genau an die Arbeitswellenlängen des holografischen Elements angepasst sind. Typischerweise sollte die Abweichung zwischen den verwendeten Wellenlängen und den Arbeitswellenlängen des holografischen Elements nicht mehr als 2 nm betragen. Bei größeren Abweichungen kann es passieren, dass grüne, rote und blaue Bildpunkte des virtuellen Bildes nicht mehr genau aufeinander liegen und somit keine korrekte Farbmischung erfolgt. Bei genauerer Abstimmung liegen die Bildpunkte für die verschiedenen Farben hingegen übereinander, und es kann im Wesentlichen eine beliebige Farbe, beispielsweise weiß oder gelb, erzeugt werden.

Bei anderen Ausführungsbeispielen kann jedoch auch eine monochrome Darstellung verwendet werden, insbesondere wenn dies für eine bestimmte Anwendung (beispielsweise Darstellung von Texten oder Zahlen) ausreichend ist. In diesem Fall ist eine genaue Abstimmung der Wellenlängen nicht erforderlich, und das holografische Element kann beispielsweise für einen vergleichsweise weiten Arbeitsbereich im Bereich von beispielsweise 30 nm ausgelegt sein.

Das von dem Bildgeber erzeugte Licht muss dann nur innerhalb dieses Arbeitsbereiches liegen, um ein möglichst verzerrungsfreies Bild zu erzeugen.

Wie durch Strahlen 34 angedeutet kann das auf das als Mattscheibe wirkende holografische Element 33 projizierte Bild dann von einem Auge 35 unter einem Winkel zur Senkrechten 37 betrachtet werden. Der Ursprungsort des Lichtes für einen bestimmten Bildpunkt wird dabei von dem Zusammenspiel des Laserprojektors mit der Geometrie der Scheibe bestimmt. Ein verzerrungsarmes Bild kann in einem bestimmten Raumbereich (Eyebox) wahrgenommen werden. Das Hologramm kann dabei bei einem bevorzugten Ausführungsbeispiel lokal so gestaltet sein, dass die Ablenkfunktion des Laserstrahls mit adäquater Beugungseffizienz erfolgen kann, d.h, die Bragg-Bedingung wird an allen Orten, die zur Bildentstehung beitragen, eingehalten. Dadurch wird bei dem Ausführungsbeispiel der Fig. 3 eine mögliche Krümmung der Windschutzscheibe 30 im holografischen Element 33 berücksichtigt.

Anstelle einer Laserlichtquelle können auch andere Lichtquellen zur Beleuchtung verwendet werden, beispielsweise auch breitbandige Quellen wie eine Halogenlampe in Kombination mit einem Bildgeber.

Auch bei dem Ausführungsbeispiel der Fig. 3 können Einfallswinkel und Ausfallswinkel der Mattscheibe im Wesentlichen beliebig gewählt werden, so dass eine Anordnung ähnlich der Anordnung der Fig. 5 angepasst an senkrechte Windschutzscheiben möglich ist.

Bei den dargestellten Ausführungsbeispielen kann insbesondere auf weitere optische Elemente verzichtet werden, was einen kompakten Aufbau ermöglicht, und ein Aufbau ist z.B. nur mit Bildgebungsvorrichtung und holografischem Element in oder auf einer Windschutzscheibe möglich.

Die Abstimmung von Arbeitswellenlängen und lokaler Ablenkfunktion eines verwendeten holografischen Elements kann bei manchen Ausführungsbeispielen zusätzlich zu der Funktion der Dateneinspiegelung zu einer Schutzfunktion vor dem Licht der mittlerweile weit verbreiteten Laserpointer führen. Dazu werden die bereits diskutierten holografischen Elemente so ausgelegt, dass die Orientierung der Bragg-Ebenen in der Hologrammschicht, die für die Umlenkung des Datenstrahlengangs sorgen, eine Blockierung für das Eindringen von Licht bestimmter Wellenlängen (z.B. 532nm, 640nm, 450nm, 405nm) ermöglichen. Durch die vorzugsweise Auslegung der Hologrammstrukturen als Reflexionshologramm erfolgt die optische Blockierwirkung vergleichsweise wie bei einem dielektrischen Schichtsystem durch Reflexion zurück nach außen. Der Abstand der Bragg-Ebenen muss dazu so gestaltet sein, dass auf den optischen Pfad des Strahles im Material eine Phasenverzögerung der Teilreflexe an benachbarten Bragg-Ebenen von einer Laserpointer-Wellenlänge entsteht. Bei Verwendung von Volumenhologramm-Material mit vergleichsweise großem Brechzahlunterschied (ca. 0,03) und vergleichsweise geringer Schichtdicke (ca. 10µm) lässt sich eine gute Unterdrückung des Laserlichtes von außen innerhalb eines ausgedehnten Winkelbereich erreichen (ca. ± 10 ... 30°). Der beste Laser-Schutz besteht beispielsweise für Blickrichtungen exakt hin zum dargestellten Bildinhalt für genau die Wellenlänge, mit der das holografische Element arbeitet.

Für einen Aufbau wie in der Fig. 2 oder der Fig. 5 gezeigt, wird dies am Beispiel der Fig. 6 erläutert. Mit 60 ist ein holografisches Element bezeichnet. Ein derartiges holografisches Element kann eine Vielzahl von Bragg-Ebenen 65 beinhalten, also Ebenen leicht unterschiedlicher optischer Brechzahl, welche in Summe als selektive Spiegel, angepasst an die Pointer-Wellenlängen, wirken. Mit 61 ist ein einfallender Strahl von einer Bildgebungsvorrichtung bezeichnet, welcher als Strahl 62 gebeugt wird und zu einem Auge eines Betrachters gelenkt wird (z.B. wie unter Bezugnahme auf Fig. 3 erläutert). Mit 66 ist eine Normale auf dem holografischen Element 60 bezeichnet.

Für entsprechende Wellenlängen, für die das holografische Element designt ist, kann zusätzlich eine Reflexionsfunktion als Schutz vor einem von außen einfallenden Laserstrahl 63 erreicht werden, welcher als Laserstrahl 64 im Wesentlichen reflektiert (gebeugt) wird. Das holografische Element 60 kann dabei auf Wellenlängen von Laserpointern (beispielsweise rote, grüne oder blaue Halbleiterlaser) abgestimmt werden. Solche Wellenlängen können zusätzlich zu den bereits erwähnten Wellenlängen für die Dateneinspiegelung in das Design des holografischen Elements 60 integriert werden. Auf diese Weise resultiert also eine kombinierte Funktion von Datenanzeige und Laserschutz (Funktionsintegration) der Vorrichtung ohne zusätzliche optisch wirksame Elemente als dem holografischen Element (auch als Combiner-Hologramm bezeichnet). Der Fahrer bzw. Pilot bzw. Betrachter wäre somit bezüglich der Hauptblickrichtungen durch das Display geschützt. Um diese Schutzfunktion an verschiedene Auslegungen des Displaysystems anzupassen, kann die Tatsache ausgenutzt werden, dass Bragg-Gitter, welche für einen bestimmten Winkel und eine bestimmte Wellenlänge ausgelegt wurden, eine andere Wellenlänge bei einem anderen Winkel effizient beugen können.

Wenn die Auslegung der Vorrichtung auf Grund anderer Aspekte derart erfolgt, dass der Haupt-Einfallswinkel der Objektwelle ausgehend vom Bildgeber gegenüber dem Normalenvektor der Bragg-Ebenen des Gitters beispielsweise deutlich geringer ist, als der zu erwartende Einfallswinkel eines Laserpointers, zum Beispiel um mehr als 10°, so muss in diesem Fall die Arbeitswellenlänge des holografischen Elements zur Anzeige von Daten gegenüber der des Laserpointers entsprechend reduziert werden (und umgekehrt). Damit ließe sich wiederum die oben genannte Bedingung bezüglich der passenden Phasenverzögerung der Teilreflexionen an den Bragg-Ebenen für die Laserpointer-Wellenlänge erreichen.

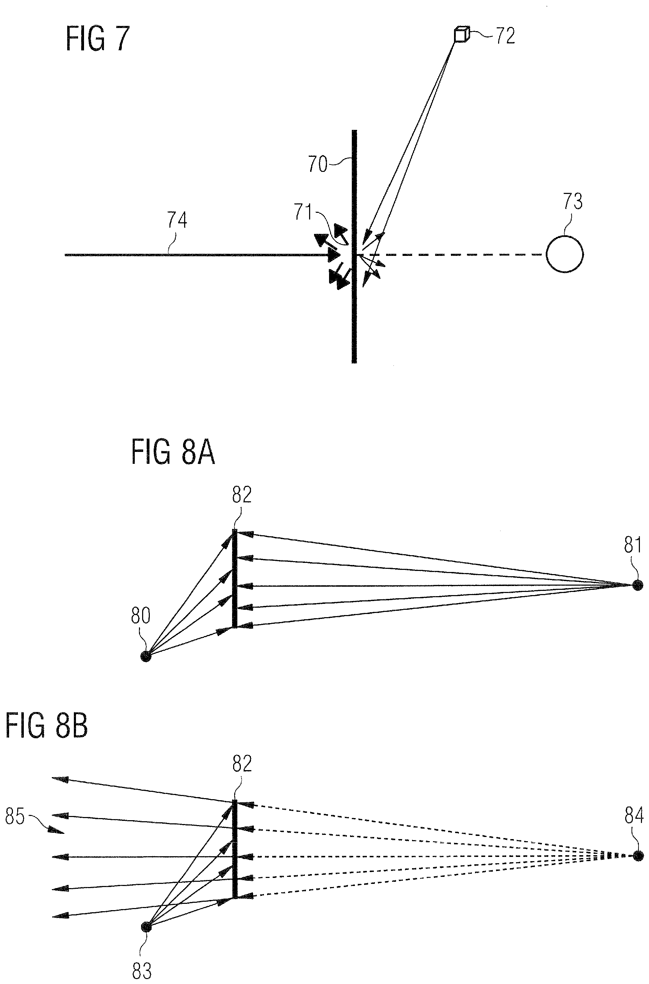

In Fig. 7 ist eine entsprechende Laserschutzfunktion für den Fall einer holografischen Mattscheibe (entsprechend dem Ausführungsbeispiel der Fig. 3) dargestellt. Mit 70 ist eine Windschutzscheibe bezeichnet, welche eine holografische Mattscheibe 71 aufweist. Wie bereits unter Bezugnahme auf Fig. 3 erläutert kann die holografische Mattscheibe 71 mit Licht von einer Bildgebungsvorrichtung 72, insbesondere einer scannenden Laserlichtquelle mit einer oder mehreren Wellenlängen, abgerastert werden, um einzuspiegelnde Daten für ein Auge/bzw. beide Augen 73 bereitzustellen.

Bei Lichteinfall von der Außen-Seite bietet die holografische Mattscheibe bei dem Ausführungsbeispiel der Fig. 7 eine Schutzfunktion. Hierzu ist die holografische Mattscheibe 71 bei dem dargestellten Ausführungsbeispiel wie oben beschrieben auf entsprechende Wellenlängen abgestimmt. Als Beispiel wird in der Fig. 7 ein einfallender Laserstrahl 74 von dem holografischen Element 71, d.h. der holografischen Mattscheibe, diffus gestreut.

Da kommerziell erhältliche Laserpointer vergleichsweise wenige mögliche Wellenlängen aufweisen, können diese Wellenlängen zum Schutz vor Laserpointern dem Design des jeweils verwendeten holografischen Elements vergleichsweise einfach hinzugefügt werden, ohne die Transparenz beispielsweise einer Windschutzscheibe insgesamt wesentlich zu beeinträchtigen.

Die Fig. 4 zeigt ein Flussdiagramm zur Veranschaulichung eines Verfahrens gemäß einem Ausführungsbeispiel. Das Verfahren der Fig. 4 kann insbesondere zum Betreiben der Vorrichtungen der Fig. 1-3 verwendet werden.

In einem Schritt 40 wird ein holografisches Element mit Licht in drei Spektralfarben, beispielsweise rot, grün und blau (rgb) beleuchtet, wobei das holografische Element bevorzugt für andere Wellenlängen transparent ist. In Schritt 41 lenkt das holografische Element dann das Licht zu einem Betrachtungsort, wobei das holografische Element hierzu das Licht auf ein Zwischenbild abbilden kann, welches von dem Betrachtungsort betrachtet wird (beispielsweise wie in Fig. 2 gezeigt) oder das holografische Element als Mattscheibe dienen kann (beispielsweise wie in Fig. 3 gezeigt).

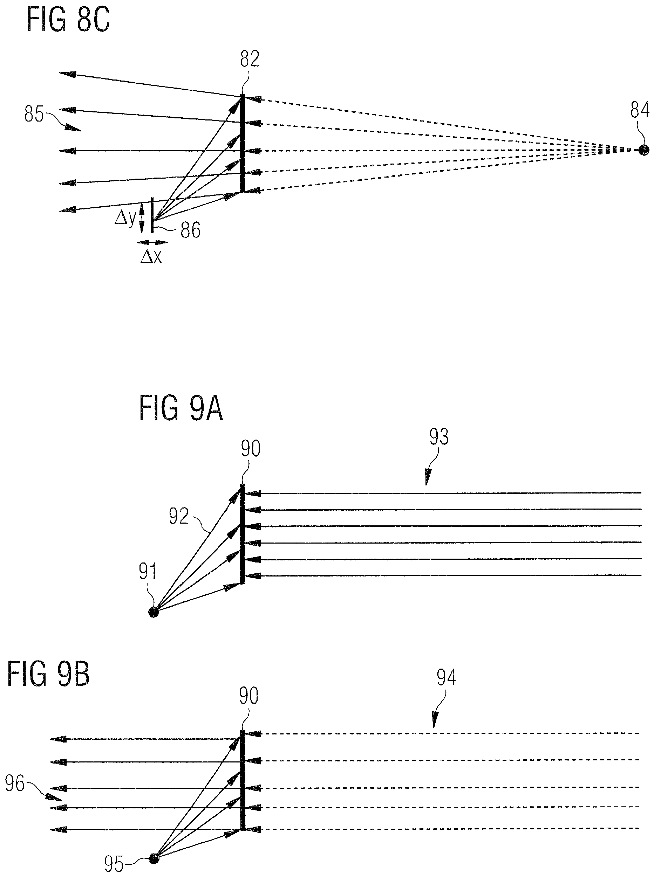

Im Folgenden wird nun noch die Herstellung holografischer Elemente gemäß Ausführungsbeispielen anhand der Fig. 8 und 9 erläutert.

In Fig. 8A ist eine Belichtung eines holografischen Elements 82 für eine Dateneinspiegelung beispielsweise entsprechend dem Ausführungsbeispiel der Fig. 2 dargestellt. Dabei wird zur Erzeugung eines holografischen Elements 82 auf dem holografischen Element 82, insbesondere innerhalb einer holografischen Schicht, eine Interferenz zweier gegenläufiger sphärischer Wellen aufgenommen, die beispielsweise mit einem kohärenten Laser ausreichender Kohärenzlänge erzeugt werden können. Eine Punktlichtquelle 80 zum Aussenden einer der sphärischen Wellen befindet sich dabei am späteren Ort der Bildgebungsvorrichtung und sendet eine sogenannte Referenzwelle aus, und eine weitere Punktlichtquelle 81 zum Aussenden der anderen der sphärischen Wellen befindet sich am Ort des späteren virtuellen Bildes und sendet eine sogenannte Signalwelle aus.

Durch Entfernung der beiden Punktlichtquellen 80, 81 von dem holografischen Element 82 bei der Belichtung wird die spätere Entfernung von der Bildgebungsvorrichtung zu dem holografischen Element 82 sowie die Entfernung des später dargestellten virtuellen Bildes festgelegt. Befindet sich beispielsweise die Punktlichtquelle 81 in einer Entfernung von 8 m zu dem holografischen Element 82, so befindet sich später beim Abspielen das virtuelle Bild ebenfalls in 8 m Entfernung von dem holografischen Element 82.

Die Entfernung des virtuellen Bildes zur Eyebox (d.h. im Wesentlichen zu einem Auge eines Betrachters) beträgt später dementsprechend zumindest näherungsweise der Summe aus Entfernung der Punktlichtquelle 80 zu dem holografischen Element 82 zuzüglich der Entfernung der Punktlichtquelle 81 zu dem holografischen Element 82. Somit lässt sich prinzipiell jede beliebige Entfernung des virtuellen Bildes bei einem späteren Einsatz realisieren

Die Fig. 8B zeigt dabei die Anwendung des wie in Fig. 8A belichteten holografischen Elements in einem "Idealfall". Das holografische Element wird ausgehend von einer Punktlichtquelle 83 (entsprechend einer Bildgebungsvorrichtung) mit Referenzlicht beleuchtet, was zur Ausbildung eines virtuellen Bildes 84 (entsprechend der Position der Punktlichtquelle 81 der Fig. 8A) führt, welches von einem Auge (Eyebox) bei 85 betrachtet werden kann.

Fig. 8C zeigt dann noch einen realen Anwendungsfall. Hier wird im Einsatz statt der Punktlichtquelle 83 eine Bildgebungsvorrichtung 86 verwendet, welche im Gegensatz zu einer Punktlichtquelle eine Ausdehnung Δy in y-Richtung und eine Ausdehnung Δx in x-Richtung aufweist. Dies kann zu Verzerrungen gegenüber dem idealen Fall der Fig. 8B führen, welche jedoch für praktische Anwendungen in gewissem Umfang vernachlässigbar sind, abhängig von einer gewünschten Bildqualität. Bevorzugt wird dabei die Ausdehnung der Bildgebungsvorrichtung vergleichsweise gering gewählt, und die Bildgebungsvorrichtung wird in der Nähe des Ortes der Punktlichtquelle 80 angeordnet.

Die Fig. 9A und 9B zeigen noch einen Fall, in welchem eine Entfernung 'unendlich' des virtuellen Bildes zu einem Betrachter realisiert wird.

Die Fig. 9A veranschaulicht dabei die Belichtung eines holografischen Elements 90. Eine Referenzwelle 92 wird von einer im Wesentlichen punktförmigen Signalquelle 91 erzeugt, entsprechend der Signalquelle 80 der Fig. 8A. Anstelle einer zweiten punktförmigen Signalquelle zur Erzeugung der Signalwelle wird hier eine Signalwelle 93 mit einem parallelen Lichtbündel verwendet, welches beispielsweise durch einen kollimierten aufgeweiteten Laserstrahl erzeugt werden kann.

Fig. 9B zeigt die Anwendung des holografischen Elements 90, das wie in Fig. 9 dargestellt belichtet wurde. Eine Bildgebungsvorrichtung 95 (im Idealfall eine punktförmige Quelle, im Realfall eine Quelle wie in Fig. 8C dargestellt) beleuchtet das holografische Element 90 von einer Position entsprechend einer Position der Signalquelle 91. Dies führt zur Erzeugung eines virtuellen Bildes im Unendlichen entsprechend Lichtstrahlen 94, welche an einem Ort 96 betrachtet werden können.

Die Erzeugung eines holografischen Elements als Mattscheibe kann entsprechend der Fig. 8A erfolgen, wobei in diesem Fall die Signalwelle von einer Mattscheibe erzeugt wird (statt von der Signalquelle 81), die sich nahe an dem holografischen Element befindet. Die holografische Mattscheibe wird also bei Ausführungsbeispielen als Reflexionshologramm aufgezeichnet. Form und Lage der Referenzquelle bleiben erhalten, können also wie die Signalquelle 80 der Fig. 8A in einem geeigneten Winkel zu dem jeweiligen holografischen Element gewählt werden, um später eine geeignete Anordnung angepasst an einen jeweiligen Bauraum zu erreichen.

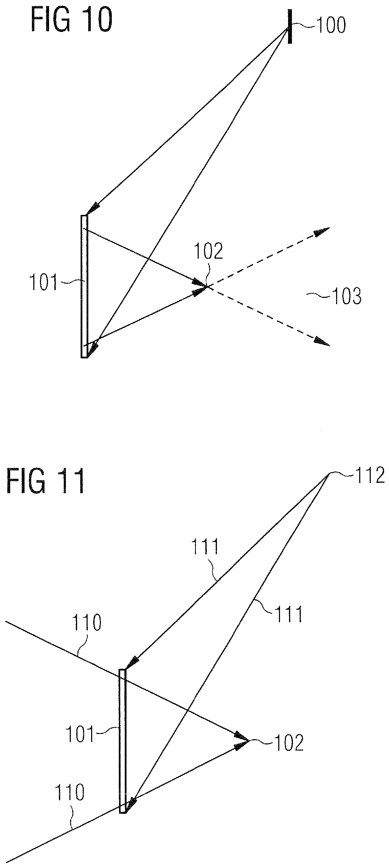

Bei den bisher diskutierten Ausführungsbeispielen wird mittels eines holografischen Elements und einer entsprechenden Bildgebungsvorrichtung ein virtuelles Bild erzeugt. Bei anderen Ausführungsbeispielen kann auch ein reelles Bild erzeugt werden. Entsprechende Ausführungsbeispiele werden nunmehr unter Bezugnahme auf die Figuren 10 und 11 erläutert.

Eine entsprechende Modifikation, d.h. eine Bereitstellung eines reellen Bildes statt eines virtuellen Bildes, kann bei allen diskutierten Ausführungsbeispielen erfolgen, sofern genügend Raum zwischen dem Betrachter und dem holografischen Element zur Erzeugung des reellen Bildes vorhanden ist. Insbesondere wird bei diesen Ausführungsbeispielen das reelle Bild zwischen dem Betrachter und dem holografischen Element erzeugt. Derartige Vorrichtungen eignen sich beispielsweise zur Darstellung von Bedienelementen, welche dann von dem Betrachter betätigt werden können, wobei zum Erkennen der Betätigung herkömmliche Vorrichtungen zur Gestenerkennung (zum Beispiel Kamera, Abstandssensoren und dergleichen) verwendet werden können. Bei Betätigung des so erzeugten Bedienelements kann dann die Darstellung des Bedienelements (beispielsweise Kopf oder Drehschalter) entsprechend der Betätigung geändert werden, beispielsweise ein Drehen des Drehschalters dargestellt werden.

In Fig. 10 ist ein Ausführungsbeispiel einer entsprechenden Vorrichtung dargestellt. Die Vorrichtung der Fig. 10 umfasst eine Bildgebungsvorrichtung 100, welche wie die Bildgebungsvorrichtung in der oben diskutierten Ausführungsbeispiele ausgestaltet sein kann, und ein holografisches Element 101. Bei Beleuchtung durch die Bildgebungsvorrichtung 100 erzeugt das holografische Element 101 ein reelles Bild an einem Ort 102, welches innerhalb einer Box 103 betrachtet werden kann. Hier wird also das reelle Bild 102 zwischen dem Betrachter (bei 103) und dem holographischen Element 101 erzeugt.

Die Fig. 11 veranschaulicht einen Herstellungsprozess für das holografische Element 101 der Fig. 10. Zur Herstellung wird ein holographisches Material wie bereits oben diskutiert mit einem Referenzstrahl (bzw. einer Referenzwelle) 111, welcher von einem Ort 112 ausgehend divergiert, belichtet. Der Ort 112 entspricht dabei dem Ort, an dem später der Bildgeber 100 angeordnet ist. Gleichzeitig wird das holografische Material mit einem Signalstrahl (einer Objektwelle) 110 belichtet, welche zu dem Ort 102 des reellen Bildes hin konvergiert. Wie bereits erläutert kann diese Belichtung getrennt für verschiedene Wellenlängen, beispielsweise eine rote, eine grüne und eine blaue Wellenlänge, geschehen.

Zu bemerken ist, dass auch Mischformen möglich sind, bei welchem sowohl ein virtuelles Bild als auch ein reelles Bild, beispielsweise mit verschiedenen kombinierten Volumenhologrammen, erzeugt wird.

Bei den bisher diskutierten Ausführungsbeispielen wird ein virtuelles oder reelles Bild in einer Ebene dargestellt. Bei anderen Ausführungsbeispielen kann eine Bilddarstellung (virtuell und/oder reell) auch in mehreren Ebenen, unter verschiedenen Winkeln und/oder allgemein an verschiedenen Orten erfolgen. Dabei kann ausgenutzt werden, dass die verwendeten holographischen Elemente, insbesondere Volumenhologramme, wie bereits beschrieben sowohl wellenlängen- als auch winkelselektiv arbeiten. Somit können verschiedene Farben zu verschiedenen Orten in abgebildet werden und/oder aus verschiedenen Winkeln betrachtet werden, indem bei der Herstellung des holografischen Elements beispielsweise die Richtungen und Formen von Referenzstrahl und Signalstrahl für verschiedene Wellenlängen verschieden gewählt werden.

Insbesondere können durch Orte, grüne und blaue Wellenlängen, welche sich hinsichtlich der Wellenlänge um mehr als einen Sensitivitätsbereich des jeweils verwendeten Hologramms unterscheiden, Farbbilder (real oder virtuell) an verschiedenen Orten erzeugt werden. Beispielsweise können für ein erstes Bild die Arbeitswellenlängen 532 nm (grün), 460 nm (blau) und 660 nm (rot) verwendet werden, während für ein 2. Bild die Arbeitswellenlängen 520 nm (grün), 442 nm (blau) und 647 nm (rot) verwendet werden können. Durch Kombination entsprechender Volumenhologramme kann hiermit beispielsweise ein 1. virtuelles Bild in einem 1. Abstand zu dem holographischen Element, beispielsweise 1 m, und ein 2. Bild in einem 2. Abstand, beispielsweise 5 m, erzeugt werden, wobei für jedes dieser Bilder eine polychromatische Darstellung inklusive Weiß möglich ist. Entsprechendes kann auch für Monochrome Bilder mit jeweils nur einer Wellenlänge implementiert werden. Die Bildgenerierung kann mit einem einzigen Bildgeber, welcher dann insgesamt 6 verschiedene Farben erzeugt, oder auch mit getrennten Bildgebern, welche auch unter verschiedenen Winkeln angeordnet sein können, realisiert werden. Ein Betrachter in der Eyebox sieht dann beide Inhalte in verschiedenen Abständen. Dabei sieht jedes holografische Element nur "seine Anführungszeichen Arbeitswellenlängen und ist ansonsten transparent. Es sind auch Kombinationen mit noch mehr Wellenlängen und anderen Abständen möglich.

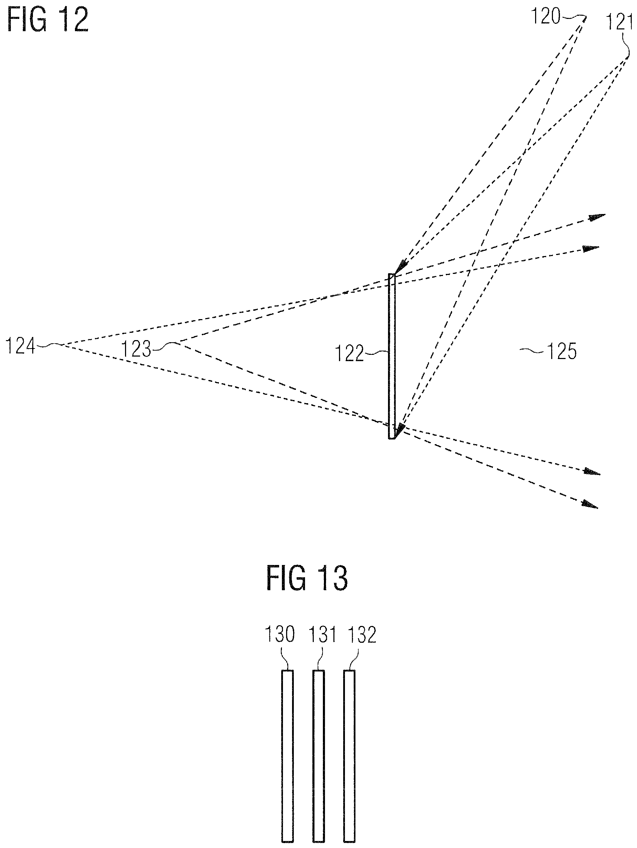

Bei Ausführungsbeispielen, bei welchen die Bildgeber an verschiedenen Orten angeordnet sind, können auch für beide Bilder die gleichen Wellenlängen verwendet werden, da wie erwähnt die holographischen Elemente auch winkelselektiv sind. Ein entsprechendes Ausführungsbeispiel ist in Fig. 12 dargestellt.

Bei dem erfindungsgemässen Ausführungsbeispiel der Fig. 12 enthält ein holographisches Element 122 Volumenhologramme für 2 verschiedene Bildgeber 120,121. Basierend auf Licht von dem Bildgeber 120 wird ein virtuelles Bild an einem Ort 123 erzeugt, und basierend auf Licht von dem Bildgeber 121 wird ein virtuelles Bild an einem Ort 124 erzeugt, der einen anderen Abstand von dem holografischen Element 122 aufweist als der Ort 122. Die beiden virtuellen Bilder können dann innerhalb einer Eyebox 125 betrachtet werden. Die Einbelichtung der Volumenhologramme für die beiden Bildgeber 120,121 kann in getrennten Schichten und jeweils wie oben besprochen erfolgen.

Bei dem in Fig. 12 dargestellten Beispiel können die virtuellen Bilder an den Orten 123,124 von derselben Eyebox 125 aus, also gleichzeitig, betrachtet werden. Es sind jedoch auch andere Variationen möglich. Beispielsweise kann das holografische Element 122 und können die Bildgeber 120 und 121 derart eingerichtet sein, dass die virtuellen Bilder gleichsam "nebeneinander" betrachtet werden können, was effektiv die Eyebox vergrößern kann. Auch kann die Ausgestaltung so sein, dass getrennte Bilder von verschiedenen Positionen, beispielsweise von einer Fahrerposition und einer Beifahrerposition in einem Fahrzeug aus, betrachtet werden können. Auf diese Weise können verschiedenen Personen verschiedene Inhalte dargestellt werden. Insgesamt ist es also möglich, verschiedene virtuelle oder reelle Bilder mittels einem oder mehreren Bildgebern, gegebenenfalls mit unterschiedlichen Arbeitswellenlängen, an verschiedenen Orten und/oder zur Betrachtung von verschiedenen Orten aus bereitzustellen.

Bei den oben diskutierten Ausführungsbeispielen wird mittels einer Bildgeber-Vorrichtung und eines holographischen Elements ein ebenes virtuelles oder reelles Bild erzeugt. Bei anderen Ausführungsbeispielen können auch dreidimensionale Inhalte (3D-Inhalte) dargestellt werden.

Bei manchen Ausführungsbeispielen werden hierfür ähnlich wie oben geschrieben getrennte virtuelle oder reelle Bilder für linkes und rechtes Auge in entsprechend kleinen Eyeboxen erzeugt. Werden die Bilder entsprechend mit unterschiedlichen Perspektiven gewählt, kann so ein Stereoeffekt hervorgerufen werden.

Bei anderen Ausführungsbeispielen kann ein 3D-Bildgeber verwendet werden, wodurch die Darstellung echter virtueller oder reeller dreidimensionaler Bilder ermöglicht wird. Ein entsprechend der Bildgeber ist in Fig. 13 schematisch dargestellt.

Der Bildgeber der Fig. 13 umfasst eine flächige Lichtquelle 130, einen räumlichen Amplitudenmodulator 131 und einen räumlichen Phasenmodulator 132. Mit dem räumlichen Amplitudenmodulator 131 kann von der Lichtquelle 130 erzeugtes Licht ortsselektiv hinsichtlich der Amplitude moduliert werden. Beispiele für derartige räumliche Amplitudenmoderatoren sind beispielsweise LCDs, Micro Spiegelanordnungen (DMD) oder LCoS-Anordnungen.

Mittels des räumlichen Phasenmodulators 132 kann entsprechend die Phase des erzeugten Lichtes ortsaufgelöst moduliert werden. Entsprechende räumliche Phasenmoderatoren sind ebenso kommerziell erhältlich und können beispielsweise auf Flüssigkristalltechnik (z.B. LCoS) basieren. Somit kann das erzeugte Licht sowohl hinsichtlich der Amplitude als auch hinsichtlich der Phase moduliert werden. Da ein 3-D Eindruck insbesondere durch verschiedene Phasen des Lichtes, welches das Auge erreicht, hervorgerufen wird, kann mit einer derartigen Anordnung ein dreidimensionales Bild erzeugt werden. Die Lichtquelle 130 kann dabei auch eingeschränkt scannend arbeiten (beispielsweise mittels Lasern), und kann verschiedene Farben (beispielsweise rot, grün, blau) für eine Farbdarstellung aufweisen. Der in Fig. 13 dargestellt Bildgeber kann an den Positionen der Bildgeber der vorstehend diskutierten Ausführungsbeispiele angeordnet sein. Bei dem Ausführungsbeispiel der Fig. 8C befindet sich dann das künstlich erzeugte räumliche 3D-Objekt im Quellpunkt des Referenzbündels bei der Aufnahme (Bezugszeichen 86 in Fig. 8C) und kann somit dann als 3D-Objekt vergrößert im Quellpunkt der Signalquelle (Bezugszeichen 84 in Fig. 8C) für die jeweilige Eyebox wiedergegeben werden. Somit ist auch die Darstellung dreidimensionaler Objekte möglich. Derartige dreidimensionale Objekte können auch zur Darstellung von Bedienelemente wie oben erläutert und verwendet werden.

Durch Verwendung der dargestellten Lösungen kann eine hohe Designfreiheit erreicht werden, da wenig Bauraum benötigt wird und insbesondere auch eine Lage einer Bildgebungsvorrichtung in weiten Grenzen frei gewählt werden kann. Die Realisierung großflächiger Vorrichtungen zur Dateneinspiegelung wird vereinfacht, da auch bei Vorrichtungen mit großem Betrachtungsfeld zur Dateneinspiegelung kein oder kaum mehr Bauraum als bei kleinen Vorrichtungen benötigt wird (es wird hier lediglich das holografische Element vergrößert - gilt aber nur für Mattscheibenvariante bei geringer Scheibenkrümmung + kleinen Betrachtungswinkeln zur Scheibennormale). Zudem werden einfache Lösungen für senkrechte Windschutzscheiben bereitgestellt. Ein in eine Windschutzscheibe eingebautes holografisches Element ist auch robust, beispielsweise gegen Sonneneinstrahlung. Eine optimale Schutzfunktion gegen Laserpointerstrahlung von Außen ist durch eine gezielte Auslegung für einen Großteil der Designs möglich.

Die dargestellten Ausführungsbeispiele dienen lediglich der Veranschaulichung und sind nicht als einschränkend auszulegen.

## Patentansprüche

1. Vorrichtung zur Dateneinspiegelung, umfassend:
eine Windschutzscheibe (10; 20; 30)
ein in oder auf der Windschutzscheibe (10; 20; 30) angeordnetes holografisches Element (11; 25; 33), und
eine Bildgebungsvorrichtung (12; 21; 31), welche oberhalb der Windschutzscheibe (10; 20; 30) angeordnet und eingerichtet ist, Licht entsprechend einzuspiegelnden Daten zu dem holografischen Element (11, 25; 33) zu senden, wobei das holografische Element (11; 25; 33) eingerichtet ist, von der Bildgebungsvorrichtung (12; 21; 31) empfangenes Licht zu einem Betrachtungsort (15; 27; 35) zu lenken,
wobei die Windschutzscheibe unter einem Winkel < 15° zur Senkrechten angeordnet ist und das holografische Element (11; 25; 33) an die unter dem Winkel <15° zur senkrechten angeordnete Windschutzscheibe angepasst ist,
wobei ein Einfallswinkel zwischen einem Hauptstrahl von der Bildgebungsvorrichtung zu dem holografischen Element und einer Senkrechten auf der Windschutzscheibe zwischen 40 und 80° liegt und ein Ausfallswinkel von dem holografischen Element zu dem Betrachtungsort (15;27;35) von dem Einfallswinkel verschieden ist.
wobei die Bildgebungsvorrichtung (12; 21; 31) zwei verschiedene Bildgeber (120, 121) aufweist, und wobei das holografische Element (11; 25; 33) Volumenhologramme für die zwei verschiedenen Bildgeber (120, 121) aufweist, wobei die Vorrichtung eingerichtet ist, basierend auf Licht von einem ersten Bildgeber (120) der zwei verschiedenen Bildgeber (120, 121) ein erstes virtuelles Bild an einem ersten Ort (123) zu erzeugen und basierend auf Licht von einem zweiten Bildgeber (121) der zwei verschiedenen Bildgeber (120, 121) ein zweites virtuelles Bild an einem zweiten Ort (124) zu erzeugen, der einen anderen Abstand von dem holografischen Element (11; 25; 33) aufweist als der erste Ort.

2. Vorrichtung nach Anspruch 1, wobei die Vorrichtung eingerichtet ist, ein dreidimensionales Objekt darzustellen.

3. Vorrichtung nach Anspruch 2, wobei die Bildgebungsvorrichtung einen Amplitudenmodulator (131) und einen Phasenmodulator (132) zum Erzeugen dreidimensionaler Bilder umfasst.

4. Vorrichtung nach einem der Ansprüche 1-3, wobei das holografische Element eingerichtet ist, Licht, welches unter einem bestimmten Winkelbereich auf das holografische Element fällt, zu dem Betrachtungsort zu lenken, und für Licht außerhalb des bestimmten Winkelbereichs transparent zu sein.

5. Vorrichtung nach einem der Ansprüche 1-4, wobei das holografische Element eine abbildende Funktion hat.

6. Vorrichtung nach einem der Ansprüche 1-5, wobei das holografische Element an eine Krümmung des Träger (10; 20; 30) angepasst ist.

7. Vorrichtung nach einem der Ansprüche 1-6, wobei das erste virtuelle Bild und das zweite virtuelle Bild innnerhalb einer Eyebox (125) betrachtbar sind.

8. Vorrichtung nach einem der Ansprüche 1-6, wobei das erste virtuelle Bild und das zweite virtuelle Bild nebeneinander betrachtbar sind, um eine Eyebox zu vergrößern.

9. Vorrichtung nach einem der Ansprüche 1-6, wobei das erste virtuelle Bild und das zweite virtuelle Bild als getrennte Bilder von verschiedenen Positionen aus betrachtbar sind.

10. Verfahren zum Betreiben einer Vorrichtung nach einem der Ansprüche 1-9, umfassend:
Beleuchten des holografischen Elements (11; 25; 33) der Vorrichtung, und
Lenken des Lichtes zu dem Betrachtungsort durch das holografische Element (11; 25; 33).

## Claims

1. Apparatus for data superimposition, comprising:
a windscreen (10; 20; 30),
a holographic element (11; 25; 33) arranged in or on the windscreen (10; 20; 30), and
an imaging apparatus (12; 21; 31), which is arranged above the windscreen (10; 20; 30) and is configured to transmit light corresponding to the data to be superimposed to the holographic element (11, 25; 33), wherein the holographic element (11; 25; 33) is configured to steer light received from the imaging apparatus (12; 21; 31) to a viewing location (15; 27; 35),
wherein the windscreen is arranged at an angle of < 15° to the perpendicular and the holographic element (11; 25; 33) is adapted to the windscreen which is arranged at the angle of < 15° to the perpendicular,
wherein an angle of incidence between a chief ray from the imaging apparatus to the holographic element and a perpendicular on the windscreen is between 40 and 80°, and an angle of reflection from the holographic element to the viewing location (15; 27; 35) is different from the angle of incidence,
wherein the imaging apparatus (12; 21; 31) has two different imaging devices (120, 121), and wherein the holographic element (11; 25; 33) has volume holograms for the two different imaging devices (120, 121), wherein the apparatus is configured to generate a first virtual image at a first location (123) based on light from a first imaging device (120) of the two different imaging devices (120, 121), and to generate a second virtual image at a second location (124) based on light from a second imaging device (121) of the two different imaging devices (120, 121), which second location has a different distance from the holographic element (11; 25; 33) than the first location.

2. Apparatus according to Claim 1, wherein the apparatus is configured to present a three-dimensional object.

3. Apparatus according to Claim 2, wherein the imaging apparatus comprises an amplitude modulator (131) and a phase modulator (132) for generating three-dimensional images.

4. Apparatus according to any one of Claims 1-3, wherein the holographic element is configured to steer light, which is incident on the holographic element at a specific angle range, to the viewing location, and to be transparent for light outside the specific angle range.

5. Apparatus according to any one of Claims 1-4, wherein the holographic element has an imaging function.

6. Apparatus according to any one of Claims 1-5, wherein the holographic element is adapted to a curvature of the carrier (10; 20; 30).

7. Apparatus according to any one of Claims 1-6, wherein the first virtual image and the second virtual image are viewable within an eyebox (125).

8. Apparatus according to any one of Claims 1-6, wherein the first virtual image and the second virtual image are viewable side by side in order to enlarge an eyebox.

9. Apparatus according to any one of Claims 1-6, wherein the first virtual image and the second virtual image are viewable as separate images from different positions.

10. Method for operating an apparatus according to any one of Claims 1-9, comprising:
illuminate the holographic element (11; 25; 33) of the apparatus, and
steering the light to the viewing location through the holographic element (11; 25; 33).

## Revendications

1. Dispositif d'affichage de données, comprenant :
un pare-brise (10 ; 20 ; 30),
un élément holographique (11 ; 25 ; 33) disposé dans ou sur le pare-brise (10 ; 20 ; 30), et
un dispositif d'imagerie (12 ; 21 ; 31) disposé au-dessus du pare-brise (10 ; 20 ; 30) et conçu de façon à envoyer de la lumière correspondant à des données devant être réfléchies vers l'élément holographique (11 ; 25 ; 33), l'élément holographique (11 ; 25 ; 33) étant conçu de façon à diriger la lumière reçue du dispositif d'imagerie (12 ; 21 ; 31) vers un emplacement de visualisation (15 ; 27 ; 35),
le pare-brise étant agencé selon un angle < 15° par rapport à la verticale et l'élément holographique (11 ; 25 ; 33) étant adapté au pare-brise agencé selon l'angle < 15° par rapport à la verticale,
un angle d'incidence entre un faisceau principal provenant du dispositif d'imagerie et l'élément holographique et une perpendiculaire au pare-brise étant compris entre 40 et 80°, et un angle de réflexion de l'élément holographique vers l'emplacement de visualisation (15 ; 27 ; 35) étant différent de l'angle d'incidence,
le dispositif d'imagerie (12 ; 21 ; 31) comprenant deux imageurs différents (120, 121), et l'élément holographique (11 ; 25 ; 33) comprenant des hologrammes en volume pour les deux imageurs différents (120, 121), le dispositif étant conçu de façon à générer, sur la base de la lumière provenant d'un premier imageur (120) des deux imageurs différents (120, 121), une première image virtuelle à un premier emplacement (123) et pour générer, sur la base de la lumière provenant d'un deuxième imageur (121) des deux imageurs différents (120, 121), une deuxième image virtuelle à un deuxième emplacement (124) qui est à une distance de l'élément holographique (11 ; 25 ; 33) différente du premier emplacement.

2. Dispositif selon la revendication 1, dans lequel le dispositif est conçu de façon à représenter un objet tridimensionnel.

3. Dispositif selon la revendication 2, dans lequel le dispositif d'imagerie comprend un modulateur d'amplitude (131) et un modulateur de phase (132) pour générer des images tridimensionnelles.

4. Dispositif selon l'une des revendications 1 à 3, dans lequel l'élément holographique est conçu de façon à diriger la lumière incidente sur l'élément holographique selon une plage angulaire donnée vers l'emplacement de visualisation, et pour être transparent pour la lumière se trouvant en dehors de la plage angulaire donnée.

5. Dispositif selon l'une des revendications 1 à 4, dans lequel l'élément holographique a une fonction de formation d'image.

6. Dispositif selon l'une des revendications 1 à 5, dans lequel l'élément holographique est adapté à une courbure du support (10 ; 20 ; 30).

7. Dispositif selon l'une des revendications 1 à 6, dans lequel la première image virtuelle et la deuxième image virtuelle sont visualisables à l'intérieur d'une région oculaire, ou « eyebox », (125).

8. Dispositif selon l'une des revendications 1 à 6, dans lequel la première image virtuelle et la deuxième image virtuelle sont aptes à être visualisées côte à côte afin d'agrandir une eyebox.

9. Dispositif selon l'une des revendications 1 à 6, dans lequel la première image virtuelle et la deuxième image virtuelle sont aptes à être visualisées en tant qu'images séparées à partir de différentes positions.

10. Procédé d'exploitation d'un dispositif selon l'une des revendications 1 à 9, comprenant :
le fait d'éclairer l'élément holographique (11 ; 25 ; 33) du dispositif, et
le fait de diriger la lumière vers l'emplacement de visualisation à travers l'élément holographique (11 ; 25 ; 33).
